(19) Europäisches Patentamt
European Patent Office
Office européen des brevets

(11) EP 2 743 725 B1

(12) EUROPÄISCHE PATENTSCHRIFT

(45) Veröffentlichungstag und Bekanntmachung des Hinweises auf die Patenterteilung:
19.08.2015 Patentblatt 2015/34

(51) Int Cl.:
G01S 7/52 (2006.01)          B06B 1/02 (2006.01)
G01S 7/523 (2006.01)

(21) Anmeldenummer: 13196289.6

(22) Anmeldetag: 09.12.2013

(54) **Ultraschallvorrichtung**

Ultrasound device

Dispositif à ultrasons

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 14.12.2012 EP 12197214

(43) Veröffentlichungstag der Anmeldung:
18.06.2014 Patentblatt 2014/25

(73) Patentinhaber: ELMOS Semiconductor AG
44227 Dortmund (DE)

(72) Erfinder:
• **Friemann, Uwe**
44227 Dortmund (DE)
• **Wang, Ling Jun**
44227 Dortmund (DE)

(74) Vertreter: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) Entgegenhaltungen:
US-A- 5 151 085          US-A1- 2003 164 658
US-A1- 2010 242 611

EP 2 743 725 B1

**Beschreibung**

Die Erfindung betrifft eine Ultraschallvorrichtung zur Verwendung beispielsweise als Einparkhilfe oder Abstandsmessung für andere Zwecke oder aber auch zur Raumüberwachung.

Ultraschallvorrichtungen weisen im Regelfall einen Ultraschallwandler auf, der ein elektrisches Signal in ein akustisches oder umgekehrt wandelt. Ein Ultraschallwandler kann demzufolge als Sender oder als Empfänger genutzt werden. Darüber hinaus existieren sogenannte Ultraschall-Transducer, die intermittierend als Sender und Empfänger geschaltet werden. Ein Ultraschallwandler weist im Regelfall einen Schwingkreis auf, durch den eine bauteilbedingte Resonanzfrequenz gegeben ist.

Zur Einkopplung elektrischer Energie in den Ultraschallwandler dient im Regelfall ein Koppel-Schwingkreis mit dem der Ultraschallwandler elektrisch gekoppelt ist. Der Koppel-Schwingkreis definiert ebenfalls eine Resonanzfrequenz, wobei es zweckmäßig ist, wenn die Resonanzfrequenzen beider Schwingkreise im Wesentlichen gleich sind. Dies hat beim Ansteuern des Ultraschallwandlers zur Abgabe von Ultraschallwellen den Vorteil, dass eine Impedanzanpassung an den Ultraschallwandler erfolgt; beim Empfangen von Ultraschallwellen durch den Ultraschallwandler und beim Umsetzen dieser akustischen Signale in elektrische Signale hat der Resonanzfrequenzabgleich den Vorteil, dass die Empfindlichkeit der Ultraschallvorrichtung maximiert werden kann.

Bei der Herstellung der Ultraschallvorrichtung wird die Resonanzfrequenz des Koppel-Schwingkreises auf diejenige des Wandler-Schwingkreises abgestimmt. Hierzu bedient man sich im Regelfall einer Spule für den Koppel-Schwingkreis, die einen verstellbaren Ferritkern aufweist. Nach dem Abgleich der Resonanzfrequenzen durch diese Abgleicheinheit werden der Ultraschallwandler und der Koppel-Schwingkreis zumeist in einem gemeinsamen Gehäuse vergossen, was den Vorteil hat, dass die gesamte Ultraschallvorrichtung robust und gegen mechanische Beschädigungen geschützt ist.

Nachteilig bei bekannten Ultraschallvorrichtungen ist, dass sich die Resonanz-frequenz des Koppel-Schwingkreises im Nachhinein nicht mehr auf die Resonanzfrequenz des Wandler-Schwingkreises abstimmen/abgleichen lässt. Dies ist insoweit problematisch, als temperatur-, umwelt- und/oder altersbedingt sich die Resonanzfrequenzen der beiden Schwingkreise verändern können.

Im Stand der Technik ist es bekannt, Ultraschallwandler zum Zwecke der Leistungsanpassung für das Aussenden von Ultraschallwellen mit hoher Leistung mittels zuschaltbarer Kapazitäten und/oder Induktivitäten abzugleichen (siehe z.B. US-A-5 151 085 und US-A-2003/0164658).

Aus US-A-2010/0242611 ist ferner ein Ultraschallwandler bekannt, der wahlweise bei einer von zwei Resonanzfrequenzen betrieben werden kann. Auch bei diesem bekannten Ultraschallwandler werden wahlweise eine Kapazität und/oder eine Induktivität zugeschaltet.

Aufgabe der Erfindung ist es, eine Ultraschallvorrichtung zu schaffen, bei der sich die Resonanzfrequenzen der beiden Schwingkreise für einen breitbandigen Betrieb der Ultraschallvorrichtung, d.h. sowohl für das Senden als auch für den Empfang von Ultraschallwellen aufeinander abstimmen lassen.

Zur Lösung dieser Aufgabe wird mit der Erfindung eine Ultraschallvorrichtung mit alternierendem Betrieb als Sender und Empfänger vorgeschlagen, die versehen ist mit einem Ultraschallwandler, einem Koppel-Schwingkreis, der mit dem Ultraschallwandler gekoppelt ist, einer Abgleicheinheit zur Abstimmung der Resonanzfrequenz des Koppel-Schwingkreises und einer Ansteuer- und Empfangseinheit zur Ansteuerung des Koppel-Schwingkreises für das Senden von Ultraschallwellen durch den Ultraschallwandler und zum Empfang von Ausgangssignalen des Koppel-Schwingkreises bei einem Empfang von Ultraschallwellen seitens des Ultraschallwandlers.

Bei dieser Ultraschallvorrichtung ist erfindungsgemäß vorgesehen, dass die Abgleicheinheit mindestens einen ansteuerbaren Schalter zum wahlweisen elektrischen Zuschalten eines oder mehrerer Abgleichbauelemente in Form einer oder mehrerer Abgleichwiderstände zu dem Koppel-Schwingkreis aufweist.

Bei der erfindungsgemäßen Ultraschallvorrichtung ist sinngemäß vorgesehen, dass die Übertragungsfunktion insoweit breitbandig ausgelegt ist, als die Ultraschallvorrichtung einerseits als Sender und andererseits als Empfänger arbeitet, und zwar bei jeweils verschiedenen Frequenzen. Das setzt eine Anpassung des Ohmschen Widerstandes des Koppel-Schwingkreises voraus, der zwischen dem Transformator und dem Ultraschallwandler angeordnet ist. Auf diese Besonderheit der Erfindung wird noch weiter unten detaillierter eingegangen werden.

Die erfindungsgemäße Ultraschallvorrichtung weist eine elektrisch ansteuerbare Abgleicheinheit (elektrisch abgleichbares Filter) auf, die mit einem oder mehreren ansteuerbaren (z.B. Halbleiter-) Schaltern versehen ist. Über diese Schalter lassen sich Abgleichwiderstände zuschalten, die dann in Reihe oder parallel zu dem Widerstand des Koppel-Schwingkreises liegen. Der Koppel-Schwingkreis umfasst im Regelfall eine Kapazität und einen Widerstand und kann gegebenenfalls auch eine Induktivität aufweisen.

Die Zuschaltung des bzw. der Abgleichwiderstände zum Koppel-Schwingkreis erfolgt von extern und kann, falls dies erforderlich ist, auch im laufenden Betrieb angepasst werden.

Die erfindungsgemäße Ultraschallvorrichtung ist ferner mit einer Ansteuer- und Empfangseinheit zur Ansteuerung des Koppel-Schwingkreises für das Senden von Ultraschallwellen durch den Ultraschallwandler und zum Empfang von (Ausgangs-) Signalen durch den Koppelschwingkreis bei Empfang von Ultraschallwellen seitens des Ultraschallwandlers versehen.

Diese Ansteuer- und Empfangseinheit kann eine Induktivität aufweisen, die nach Art eines Transformators mit der Induktivität des Koppel- Schwingkreises magnetisch gekoppelt ist und über die elektrische Energie in den Ultraschallwandler eingebracht wird, welche dann vom Ultraschallwandler in akustische Wellen umgesetzt wird. Beim Empfang von Ultraschallwellen wird das vom Ultraschallwandler erzeugte elektrische Signal beispielsweise über einen Auskoppelwiderstand odgl. -bauelement in die Ansteuer- und Empfangseinheit direkt eingeleitet, ohne dass der Transformator Auskoppel-Stromkreisinduktivität und Induktivität der Ansteuer- und Empfangseinheit verwendet wird. Die Ansteuer- und Empfangseinheit bzw. das zuvor beschriebenen Interface dieser Einheit zur Ultraschallvorrichtung kann ebenfalls in dem gemeinsamen Gehäuse von Ultraschallwandler und Koppel-Schwingkreis integriert sein.

In weiterer vorteilhafter Ausgestaltung der Erfindung kann mit Vorteil vorgesehen sein, dass der Koppel-Schwingkreis einen Widerstand, einen Kondensator und eine Spule aufweist und dass die Abgleicheinheit ein oder mehrere ansteuerbare Schalter zur wahlweisen Parallelschaltung einer oder mehrerer Abgleichkondensatoren zum Koppel-Schwingkreiskondensator und/oder ein oder mehrere ansteuerbare Schalter zur Verschaltung eines oder mehrerer Abgleichwiderstände in Reihe mit oder parallel zu dem Koppel-Schwingkreiswiderstand und/oder ein oder mehrere ansteuerbare Schalter, der/die mit einem Abgriff bzw. jeweils einem unterschiedlichen von mehreren Abgriffen der Koppel-Schwingkreisspule verbunden ist/sind, aufweist.

Bei dieser Variante der Erfindung kann ferner vorteilhafterweise vorgesehen sein, dass die Abgleicheinheit ferner mindestens einen ansteuerbaren Schalter zur wahlweisen elektrischen Zuschalten eines oder mehrerer weiterer Abgleichelemente wie Abgleichkapazität und/oder Abgleichinduktivität aufweist. Hierbei ist es ferner zweckmäßig, wenn die Abgleicheinheit mindestens einen ansteuerbaren Schalter zur wahlweisen Parallelschaltung einer oder mehrerer Abgleichkondensatoren zum Koppel-Schwingkreiskondensator und/oder ein oder mehrere ansteuerbare Schalter und/oder ein oder mehrere ansteuerbare Schalter, der/die mit einem Abgriff bzw. jeweils einem unterschiedlichen von mehreren Abgriffen der Koppel-Schwingkreisspule verbunden ist/sind, aufweist.

In weiterer vorteilhafter Ausgestaltung der Erfindung kann vorgesehen sein, dass der Ultraschallwandler einen Wandler-Schwingkreis mit einer Resonanz- frequenz aufweist und dass die Resonanzfrequenz des Koppel-Schwingkreises durch die Abgleich-Einheit auf die Resonanz-Frequenz des Wandler-Schwingkreises abgleichbar ist.

Schließlich kann es zweckmäßig sein, wenn der Ultraschallwandler und der Koppel-Schwingkreis in einem gemeinsamen Gehäuse vergossen sind, aus dem elektrische Anschlüsse für die außerhalb des Gehäuses angeordnete Abgleicheinheit oder deren ansteuerbare Schalter herausgeführt sind, wobei die Abgleichbauelemente der Abgleicheinheit ebenfalls in dem vergossenen Gehäuse angeordnet sein können.

Zur Lösung dieser Aufgabe wird mit der Erfindung alternativ eine Ultraschallvorrichtung vorgeschlagen, die versehen ist mit

- einem Ultraschallwandler,
- einem Koppel-Schwingkreis, der mit dem Ultraschallwandler gekoppelt ist,
- einer Abgleicheinheit zur Abstimmung der Resonanzfrequenz des Koppel-Schwingkreises und ggf.
- einer Ansteuer- und Empfangseinheit zur Ansteuerung des Koppel-Schwingkreises für das Senden von Ultraschallwellen durch den Ultraschallwandler und zum Empfang von Ausgangssignalen des Koppel-Schwingkreises bei einem Empfang von Ultraschallwellen seitens des Ultraschallwandlers.

Bei dieser Ultraschallvorrichtung ist alternativ erfindungsgemäß vorgesehen,

- dass die Abgleicheinheit mehrere ansteuerbare Schalter zum wahlweisen elektrischen Zuschalten eines oder mehrerer Abgleichbauelemente wie z.B. Abgleichkapazität, Abgleichinduktivität und/oder Abgleichwiderstand zu dem Koppel-Schwingkreis aufweist.

Die erfindungsgemäße Ultraschallvorrichtung weist eine elektrisch ansteuerbare Abgleicheinheit (elektrisch abgleichbares Filter) auf, die mit mehreren ansteuerbaren Schaltern versehen ist. Über diese Schalter lassen sich Abgleichbauelemente zuschalten, die dann in Reihe oder parallel zu den Bauteilen des Koppel-Schwingkreises liegen. Der Koppel-Schwingkreis umfasst im Regelfall eine Induktivität (bspw. Spule), eine Kapazität (bspw. Kondensator) und einen Widerstand auf. Die Abgleicheinheit ist versehen mit ein oder mehreren Abgleichkapazitäten und/oder ein oder mehreren Abgleichinduktivitäten und/oder ein oder mehreren Abgleichwiderständen.

Über die steuerbaren Schalter lässt sich nun wahlweise eine der Abgleichkapazitäten und/oder eine der Abgleichinduktivitäten und/oder einer der Abgleichwiderstände zum Koppel-Schwingkreis zuschalten. Dieser Vorgang erfolgt von extern (bezogen auf das Gehäuse des Ultraschallwandlers mit Koppel-Schwingkreis) und kann laufend während des Betriebes der Ultraschallvorrichtung vorgenommen werden.

In vorteilhafter Ausgestaltung der Erfindung kann die Ultraschallvorrichtung ferner versehen sein mit einer Ansteuer- und Empfangseinheit zur Ansteuerung des Koppel-Schwingkreises für das Senden von Ultraschallwellen durch den Ultraschallwandler und zum Empfang von Ausgangssignalen des Koppel-Schwingkreises bei einem Empfang von Ultraschallwellen seitens des Ultraschallwandlers. Diese Ansteuer- und Empfangseinheit kann eine Induktivität aufweisen, die nach Art eines Transformators mit der Induktivität des Koppel-Schwingkreises magnetisch gekoppelt ist und über die elektrische Energie in den Ultraschallwandler eingebracht wird, welche dann vom Ultraschallwandler in akustische Wellen umgesetzt wird. Beim Empfang von Ultraschallwellen wird das vom Ultraschallwandler erzeugte elektrische Signal beispielsweise über einen Auskoppelwiderstand odgl. -bauelement in die Ansteuer- und Empfangseinheit direkt eingeleitet, ohne dass der Transformator Auskoppel-Stromkreisinduktivität und Induktivität der Ansteuer- und Empfangseinheit verwendet wird. Die Ansteuer- und Empfangseinheit bzw. das zuvor beschriebene Interface dieser Einheit zur Ultraschallvorrichtung kann ebenfalls in dem gemeinsamen Gehäuse von Ultraschallwandler und Koppel-Schwingkreis integriert sein.

In weiterer vorteilhafter Ausgestaltung der Erfindung kann vorgesehen sein, dass der Koppel-Schwingkreis einen Widerstand, einen Kondensator und eine Spule aufweist und dass die Abgleicheinheit ein oder mehrere ansteuerbare Schalter zur wahlweisen Parallelschaltung einer oder mehrerer Abgleichkondensatoren zum Koppel-Schwingkreiskondensator und/oder ein oder mehrere ansteuerbare Schalter zur Verschaltung eines oder mehrerer Abgleichwiderstände in Reihe mit oder parallel zu dem Koppel-Schwingkreiswiderstand und/oder ein oder mehrere ansteuerbare Schalter, der/die mit einem Abgriff bzw. jeweils einem unterschiedlichen von mehreren Abgriffen der Koppel-Schwingkreisspule verbunden ist/sind, aufweist.

Wie bereits oben erwähnt, weist der Ultraschallwandler eine Ultraschallvorrichtung einen Wandler-Schwingkreis mit einer Resonanzfrequenz auf, wobei die Resonanzfrequenz des Koppel-Schwingkreises durch die Abgleicheinheit auf die Resonanzfrequenz des Wandler-Schwingkreises abgleichbar ist.

Wie bereits oben erwähnt, lässt sich die erfindungsgemäß Ultraschallvorrichtung mittels des erfindungsgemäß vorgesehenen elektrisch abgleichbaren Filters vorteilhaft dann einsetzen, wenn der Ultraschallwandler und der KoppelSchwingkreis in einem gemeinsamen Gehäuse vergossen sind, aus dem elektrische Anschlüsse für die außerhalb des Gehäuses angeordnete Abgleicheinheit oder deren ansteurerbare Schalter herausgeführt sind.

Die erfindungsgemäße Ultraschallvorrichtung lässt sich sowohl in einem Sender als auch in einem Empfänger und darüber hinaus auch bei Ultraschall-Transducern, die alternierend zwischen dem Sende- und dem Empfangsbetrieb umschalten, einsetzen. Dabei ist die Ultraschallvorrichtng im Sendebetrieb für eine möglichst optimale Leistungsanpassung ausgelegt, während sie im Empfangsbetrieb Störsignale möglichst vollständig herausfiltern können sollte, so dass der Nutzsignalanteil recht groß ist.

Die Erfindung wird nachfolgend anhand dreier Ausführungsbeispiele sowie unter Bezugnahme auf die Zeichnung näher erläutert. Im Einzelnen zeigen dabei:

Fig. 1 bis 3     verschiedene Darstellungen der elektrischen Beschaltung einer Ultraschallvorrichtung bei deren Betrieb im Empfangs- und im Sendemodus sowie zur Darstellung der Impedanzfunktionsermittlung,

Fig. 4     die Übertragungsfunktion einer für den Empfangsmodus optimierten Ultraschallvorrichtung in Abhängigkeit von RD,

Fig. 5     Ein Schaltplan für eine Ultraschallvorrichtung mit elektrisch abgleichbarem Filter gemäß einem ersten Ausführungsbeispiel der Erfindung,

Fig. 6     Ein Schaltplan für eine Ultraschallvorrichtung mit elektrisch abgleichbarem Filter gemäß einem zweiten Ausführungsbeispiel der Erfindung,

Fig. 7     Ein Schaltplan für eine Ultraschallvorrichtung mit elektrisch abgleichbarem Filter gemäß einem dritten Ausführungsbeispiel der Erfindung und

Fig. 8 und 9     zwei mögliche Abgleichwiderstands-Beschaltungen.

Bevor im Folgenden ein Ausführungsbeispiel der Erfindung beschrieben wird, soll zuvor noch auf einige grundlegende schaltungstechnische Eigenschaften einer Ultraschallvorrichtung bzw. eines Ultraschallwandlers eingegangen werden, der alternierend im Sende- und im Empfangsmodus betrieben wird.

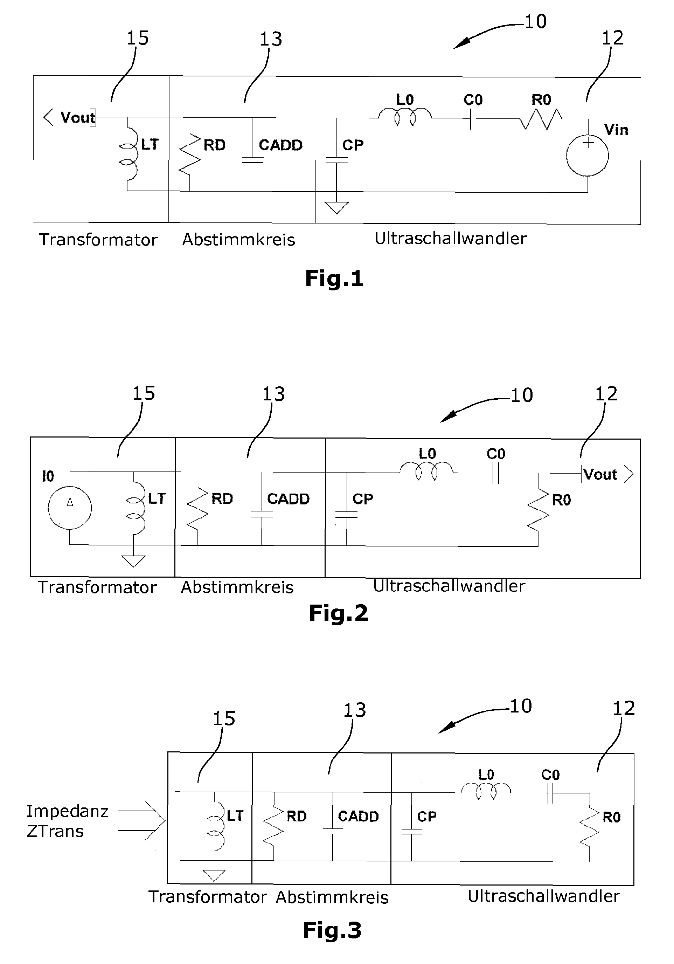

Fig. 1 zeigt das Ersatzschaltbild einer Ultraschallvorrichtung 10 im Empfangsmodus. Diese Ultraschallvorrichtung 10 weist einen Ultraschallwandler 12 auf, der in Fig. 1 als Ersatzschaltbild mit einer Reihenschaltung aus einer Induktivität L0, einer Kapazität C0 und einem Widerstand R0 und mit einer Energiequelle Vin sowie einer weiteren Kapazität CP (hervorgerufen durch den Oszillator, z.B. Piezokristall) dargestellt ist. Die Energiequelle Vin erzeugt in Folge der im Empfangsmodus auf den Ultraschallwandler 12 einwirkenden Ultraschallwellen eine elektrische Spannung. An den Ultraschallwandler 12 schließt sich ein Abstimmkreis 13 mit einer Parallelschaltung aus einer Kapazität CADD und einem Widerstand RD an, woraufhin ein Transformator 15 folgt, von dem in Fig. 1 die Induktivität LT im Ersatzschaltbild gezeigt ist. Die Kapazität CADD des Abstimmkreises 13 dient dazu, den in der Praxis recht großen Temperaturkoeffizienten der Piezokapazität CP zumindest teilweise zu kompensieren und ist im Rahmen dieser Erfindung grundsätzlich nicht bzw. weniger relevant.

Fig. 2 zeigt die Situation der Ultraschallvorrichtung 10 im Sendemodus, wenn also die über den Transformator 15 eingespeiste Energie vom Ultraschallwandler 12 in Form von Ultraschallwellen ausgesendet wird.

Die durch die Ultraschallvorrichtung 10 gegebene Impedanz setzt sich aus der Verschaltung der zuvor genannten Elemente zusammen, wie es in Fig. 3 wiedergegeben ist.

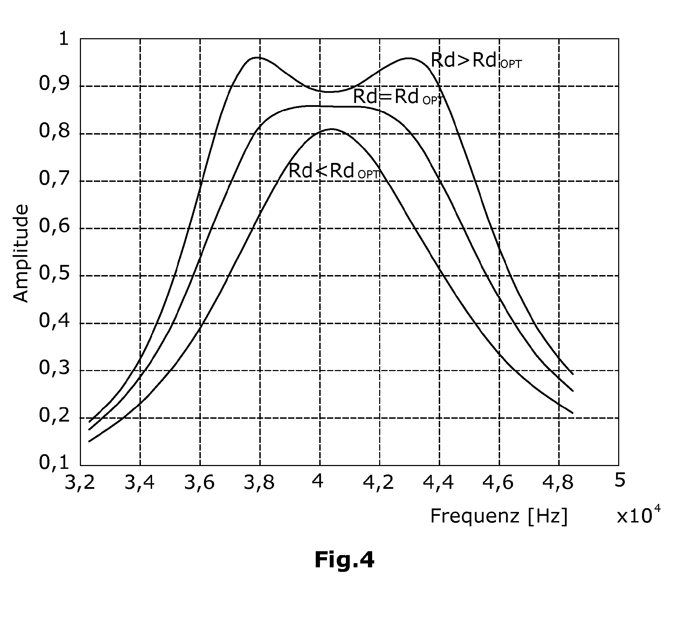

Aus den Fign. 1 und 2 lassen sich dann die Übertragungsfunktionen der Ultraschallvorrichtung 10 für den Sende- und den Empfangsfall ableiten, wobei es nun möglich ist, die für diese Einsätze optimalen Bauteile zu bestimmen. Exemplarisch soll dies nachfolgend am Widerstand RD dargestellt werden, wobei Fig. 4 die Übertragungsfunktion in Abhängigkeit von RD zeigt. Die Ultraschallvorrichtung 10 arbeitet im Empfangsmodus wie ein (Bandpass-)Filter, das erfindungsgemäß durch eine Abgleicheinheit (wird weiter unten erläutert) abstimmbar ist. Dabei sollte das Filter eine möglichst große Bandbreite aufweisen, da dies die Antwortzeit des Filters im Zeitbereich bestimmt und damit eine gute Entfernungsauflösung erlaubt. Auf der anderen Seite ist die Bandbreite des Filters so zu wählen, dass es nicht zu breit ist, weil sonst Rauschen und andere akustische Störquellen in den Übertragungsbereich des Filters fallen und als Echo erfasst werden. Wenn dieser Widerstand RD nicht vorhanden ist, ist die Impedanzanpassungsfunktion der Schaltung nach wie vor gegeben, aber eine Optimierung der erforderlichen Bandbreite des Filters lässt sich ohne einen parallel zu dem Transformator geschalteten Widerstand RD nicht erreichen.

Ein weiterer Punkt, der sich aus der Verwendung als Abstandssensor in Fahrzeuganwendungen ergibt, ist die Tatsache, dass nicht nur die Information eines einzelnen Sensors (d.h. einer einzelnen Ultraschallvorrichtung) berücksichtigt werden muss. Wenn ein Sensor einen Ultraschallpuls aussendet und das Echo eines Hindernisses empfängt, kann sich aus der Laufzeit des Echos zweidimensional betrachtet das Objekt nur auf einem Kreis anordnen. Dies ist für diese Anwendung ungenau. Bei Auswertung der Echos von zwei Sensoren (bzw. Ultraschallvorrichtungen) ergeben sich zwei Kreise, so dass die Position des Echos genauer bestimmt werden kann. Es ist ideal, wenn ein Sensor auch die Echos des anderen Sensors empfangen kann, weil sich dadurch ein schnellerer Messablauf ergibt.

Die sich hierdurch ergebende Anforderung bedeutet, dass das Optimierungsproblem über die Verwendung eines einzelnen Sensors hinausgeht und die komplette Übertragungskette mit einer ersten Ultraschallvorrichtung (erster Sensor z.B. mit den Bauteilen nach Anspruch 1) und einer zweiten Ultraschallvorrichtung (zweiter Sensor z.B. mit der gleichen Schaltungstopologie, aber durch Fertigungsstreuungen und Temperatureinflüsse mit anderen elektrischen Parametern behafteten Bauteilen) betrifft.

Die hier beschriebene Schaltung geht aufgrund der oben aufgeführten Anforderungen also deutlich über eine Schaltung zur Impedanzanpassung hinaus, wie es z.B. in den oben genannten Dokumenten zum Stand der Technik beschrieben ist.

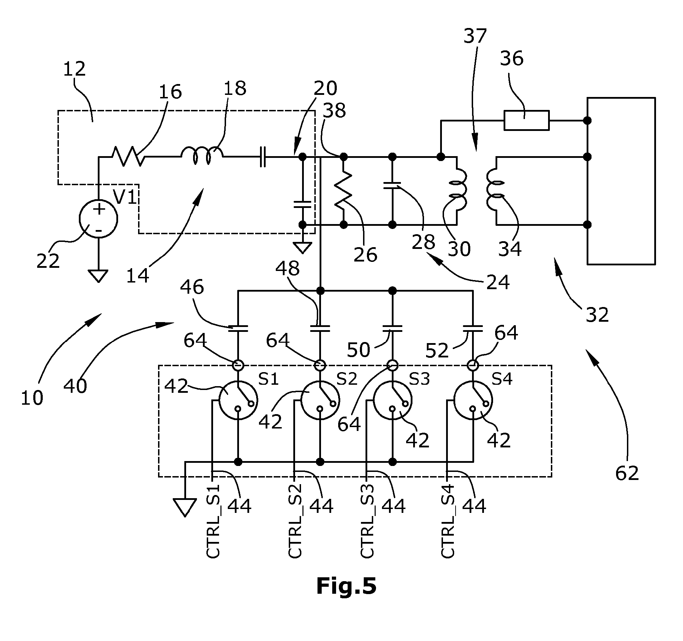

Fig. 5 zeigt die wesentlichen schaltungstechnischen Komponenten einer Ultraschallvorrichtung 10 mit einem Ultraschallwandler 12, der einen Wandler-Schwingkreis 14 aus einem Widerstand 16, einer Spule bzw. Induktivität 18 und einer Kapazität 20 in Form eines oder mehrerer Kondensatoren aufweist. Mit 22 ist eine Spannungsversorgung bezeichnet.

Elektrisch gekoppelt mit dem Ultraschallwandler 12 bzw. dem Wandler-Schwingkreis 14 ist ein Koppel-Schwingkreis 24, der einen Widerstand 26, einen Kondensator bzw. eine Kapazität 28 und eine Spule bzw. Induktivität 30 aufweist. Zur Einspeisung elektrischer Energie in den Ultraschallwandler 12, und zwar über den Koppel-Schwingkreis 24, dient eine Ansteuer- und Empfangseinheit 32 mit einer Speisespule 34 und einem Auskoppelwiderstand 36. Die beiden Spulen bzw. Induktivitäten 30 und 34 bilden einen Transformator 37. Über die Speisespule 34 wird in die Induktivität 30 des Koppel-Schwingkreises 24 Energie eingebracht, die anschließend im Ultraschallwandler 12 in akustische Signale (Ultraschallwellen) umgewandelt wird. Empfangene Ultraschallwellen werden im Ultraschallwandler 12 in elektrische Signale umgewandelt, die dann über den Koppel-Schwingkreis 24 und den Auskoppelwiderstand 36 der Ansteuer- und Empfangseinheit 32 abgegriffen werden.

Mit dem Knotenpunkt 38 der elektrischen Schaltung zwischen dem Wandler-Schwingkreis 14 und dem Koppel-Schwingkreis 24 ist eine elektrisch steuerbare Abgleicheinheit 40 verbunden, die der Veränderung der Resonanzfrequenz des Koppel-Schwingkreises 24 und damit der Abstimmung der Resonanzfrequenz des Koppel-Schwingkreises 24 auf die Resonanzfrequenz des Wandler-Schwingkreises 14 dient. Im Ausführungsbeispiel gemäß Fig. 5 umfasst die Abgleicheinheit 40 mehrere (hier vier) Schalter 42, die über Steuerleitungen 44 ansteuerbar sind und im eingeschalteten Zustand eine der Abgleichkapazitäten 46, 48, 50, 52 in Reihe mit der Koppel-Schwingkreiskapazität 28 schalten. Es können auch mehrere zueinander parallele Schalter 42 eingeschaltet sein, so dass dementsprechend mehrere Abgleich-Kapazitäten in Reihe mit der Koppel-Schwingkreiskapazität 28 geschaltet sind. Auf diese Weise lässt sich über die Steuerleitungen 44 die Kapazität des Koppel-Schwingkreises 24 beeinflussen und damit die beiden Resonanzfrequenzen von Koppel-Schwingkreis 24 und Wandler-Schwingkreis 14 aufeinander abstimmen.

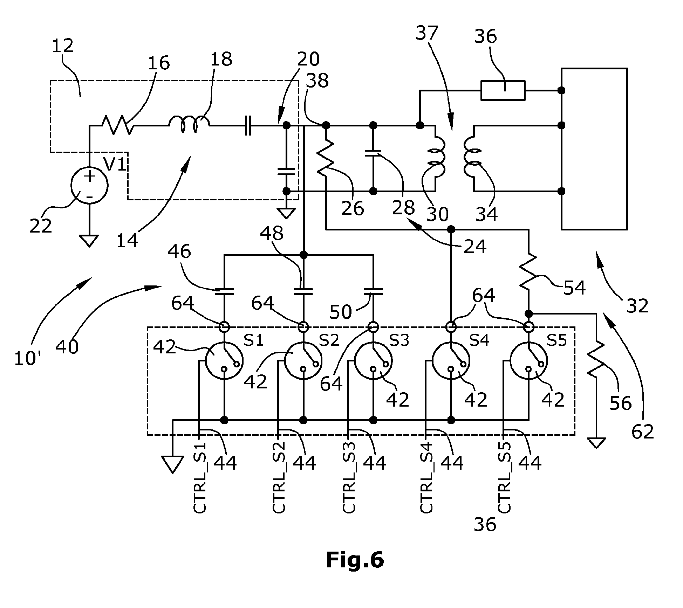

Fig. 6 zeigt die Schaltung für die wesentlichen Komponenten einer Ultraschallvorrichtung 10/gemäß einem Ausführungsbeispiel. Sofern in Fig. 6 die gleichen Bezugszeichen wie in Fig. 5 verwendet sind, sollen damit gleiche bzw. funktionsgleiche Bauelemente beider Schaltungen bezeichnet sein.

Im Unterschied zur Ausführungsform nach Fig.

5 umfasst die Abgleicheinheit 40 gemäß Fig. 6 neben den in diesem Ausführungsbeispiel drei Abgleichkapazitäten 46, 48, 50 zusätzlich zwei Schalter 42 zum Zuschalten eines oder zweier Abgleichwiderstände 54, 56 und zwar in diesem Ausführungsbeispiel in Reihe zum Koppel-Schwingkreiswiderstand 26. Somit lässt sich also die Güte des Koppel-Schwingkreises 24 elektrisch einstellen.

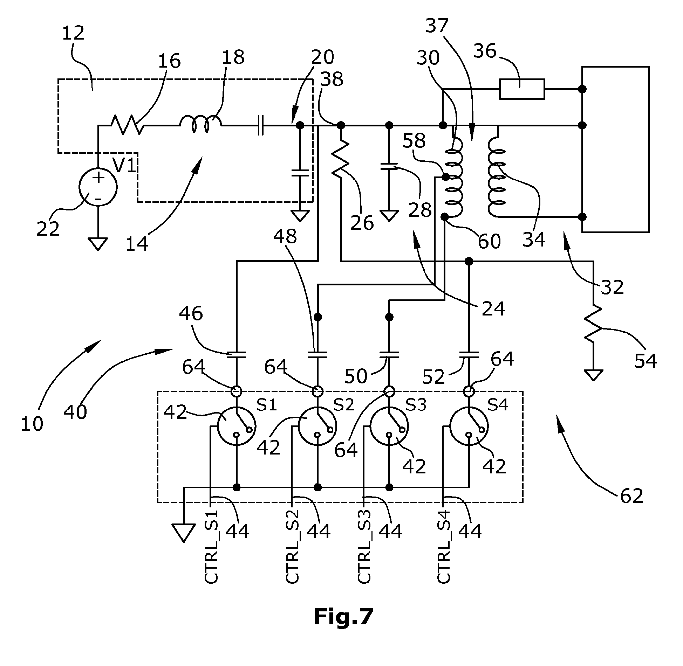

Ein weiteres Ausführungsbeispiel für ein elektrisch abgleichbares Filter einer Ultraschallvorrichtung zeigt Fig. 7, wobei auch hier gilt, dass in Fig. 7 mit den gleichen Bezugszeichen, wie sie in den Fig. 5 und 6 verwendet sind, gleiche bzw. funktionsgleiche Bauteile gemeint sind.

Im Ausführungsbeispiel gemäß Fig. 7 weist die Abgleicheinheit 40 einen Abgleichkondensator 46 und einen Abgleichwiderstand 54 auf, die jeweils über ansteuerbare Schalter 42 einzeln oder gemeinsam zum Koppel-Schwingkreis 24 zugeschaltet werden können. Zusätzlich umfasst die Abgleicheinheit 40 aber auch zwei ansteuerbare Schalter 42, mit denen sich die jeweilige wirksame Induktivität 30 des Koppel-Schwingkreises 24 beeinflussen lassen. Hierzu weist die Induktivität 30 (bspw. Spule) mehrere (im Ausführungsbeispiel zwei) Abgriffe 58, 60 auf, die mit den betreffenden Schaltern 42 der Abgleicheinheit 40 elektrisch verbunden sind.

Sämtlichen drei Ausführungsbeispielen der erfindungsgemäßen Ultraschallvorrichtung gemein ist, dass der Ultraschallwandler 12 und der Koppel-Schwingkreis 24 (sowie gegebenenfalls die Speisespule 34 und der Auskoppelwiderstand 36 der Ansteuer- und Empfangseinheit 32) in einem gemeinsamen Gehäuse vergossen sein können. Bestandteil der vergossenen Komponenten können darüber hinaus auch die Abgleich-Bauelemente der Abgleicheinheit 40 sein. Aus diesem gemeinsamen Gehäuse 62 führen elektrische Anschlüsse 64 heraus, an die die ansteuerbaren Schalter 42 angeschlossen sind. Somit kann mit Vorteil erreicht werden, dass die in der Vergussmasse befindliche Schaltung zum Abgleich der Resonanzfrequenz des Koppel-Schwingkreises 24 auf diejenige des Wandler-Schwingkreises 14 von außen abgestimmt werden kann.

Für die drei Ausführungsbeispiele und die Erfindung im allgemeinen gilt, dass die Anzahl der wahlweise zuschaltbaren Abgleichelemente und damit die Anzahl der Schalter grundsätzlich nicht begrenzt ist. Insbesondere gilt dies für die wahlweise Zuschaltung des ohmschen (Abgleich-) Widerstandes (siehe Fig. 6).

Der gemäß Fig. 6 aus den beiden Abgleichwiderständen 54 und 56 bestehende Spannungsteiler kann mehr als zwei Widerstände und dementsprechend mehr als zwei Schalter 42 umfassen.

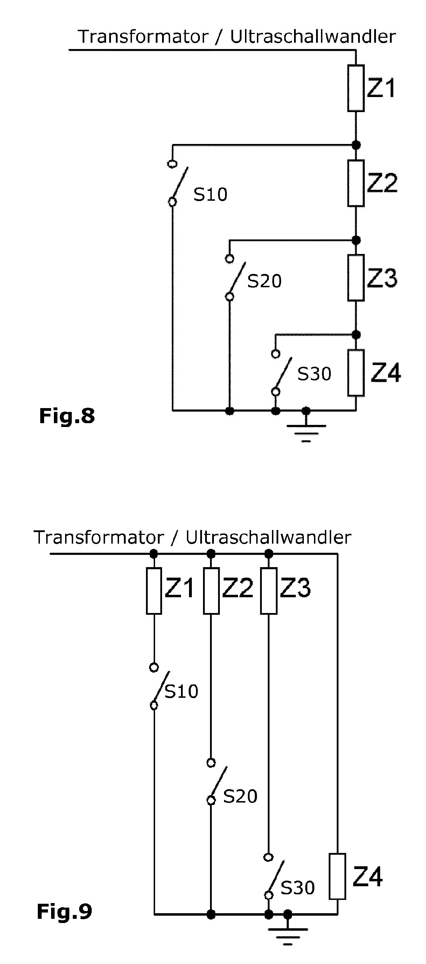

Eine weitere Besonderheit der erfindungsgemäßen Ultraschallvorrichtung ist in der Verschaltung der Abgleichwiderstände 54, 56 mit den zugehörigen Schaltern 42 (bzw. S4 und S5) zu sehen. Nachfolgend werden anhand der Fign. 8 und 9 Besonderheiten dieser möglichen Abgleichwiderstands-Beschaltungen beschrieben.

Die Situation gemäß Fig. 8 ist dabei vergleichbar mit der Abgleichwiderstands-Beschaltung nach Fig. 6, wobei anstelle zweier Abgleichwiderstände 54, 56 in Fig. 8 vier Abgleichwiderstände Z1 bis Z4 gezeigt sind. Diese Anordnung hat den Vorteil, dass der Spannungsabfall über dem Schalter minimiert ist. Die maximale Spannung an S10 ist:

$$V_{SI} =_{Transformer} * \frac{Z2 + Z3 + Z4}{Z1 + Z2 + Z3 + Z4},$$

und ist damit wegen der Spannungsteilerstruktur geringer als die Spannung am Ultraschallwandler, so dass Halbleiterschalter mit geringerer Spannungsfestigkeit eingesetzt werden können.

Die Spannung an den anderen Schaltern S20 und S30 ist geringer.

Mit der Anordnung der Elemente nach Fig. 8 lassen sich vier verschiedene Impedanzen realisieren:

Z1
Z1+Z2
Z1+Z2+Z3
Z1+Z2+Z3+Z4

Mit der Anordnung nach Fig. 9 lassen sich mit ebenfalls drei Schaltern S10, S20, S30 jedoch folgende Impedanzvariationen realisieren:

Z4
Z4 || Z3
Z4 || Z3 || Z2
Z4 || Z3 Z2 || Z1
Z4 || Z2
Z4 || Z2 || Z1
Z4 || Z3 || Z1
Z4 || Z1

Dies bedeutet, dass bei gleichem Aufwand (4 Bauelemente, drei Schalter) acht verschiedene Varianten der Impedanz generiert werden können.

Diese Anordnung der Schalter kann auch für die vorgesehene Applikation verwendet werden, wenn die Impedanzen so groß sind, dass der Strom, der fließt, wenn die Durchbruchspannung der elektronischen Schalter erreicht wird, auf ein sicheres Niveau begrenzt wird. Da der Sendeimpuls sehr kurz ist im Vergleich zur gesamten Betriebszeit der Schaltung (<1%), kann diese Anordnung der Bauelemente so durchaus verwendet werden.

Die Anzahl der verwendeten Schalter bestimmt sich aus der nominal zu erreichenden Übertragungsfunktion mit einem für die Applikation akzeptablen Toleranzband und der Präzision der verwendeten Bauteile. Wobei neben der Toleranz der verwendeten Bauteile auch die Temperaturabhängigkeit der elektrischen Parameter entscheidenden Einfluss hat. Aus diesen maximalen Bauelementeabweichungen vom Nominalwert und den tolerierbaren Abweichungen, die noch eine stabile Übertragungsfunktion ergeben, lässt sich die Anzahl der erforderlichen Bauelemente und Schalter errechnen.

**BEZUGSZEICHENLISTE**

| | |
|---|---|
| 10 | Ultraschallvorrichtung |
| 12 | Ultraschallwandler |
| 14 | Wandler-Schwingkreis |
| 16 | Widerstand des Wandler-Schwingkreises |
| 18 | Induktivität des Wandler-Schwingkreises |
| 20 | Kapazität des Wandler-Schwingkreises |
| 24 | Koppel-Schwingkreis |
| 26 | Widerstand des Koppel-Schwingkreises |
| 28 | Kapazität des Koppel-Schwingkreises |
| 30 | Induktivität des Koppel-Schwingkreises |
| 32 | Ansteuer- und Empfangseinheit |
| 34 | Speisespule der Ansteuer- und Empfangseinheit |
| 36 | Auskoppelwiderstand der Ansteuer- und Empfangseinheit |
| 37 | Transformator |
| 38 | Knotenpunkt zwischen Wandler- und Koppel-Schwingkreis |
| 40 | Abgleicheinheit für den Koppel-Schwingkreis |
| 42 | Schalter der Abgleicheinheit |
| 44 | Steuerleitungen der Schalter |
| 46 | Abgleichkapazität der Abgleicheinheit |
| 48 | Abgleichkapazität der Abgleicheinheit |
| 50 | Abgleichkapazität der Abgleicheinheit |
| 52 | Abgleichkapazität der Abgleicheinheit |
| 54 | Abgleichwiderstand der Abgleicheinheit |
| 56 | Abgleichwiderstand der Abgleicheinheit |
| 58 | Abgriff der Induktivität des Koppel-Schwingkreises |
| 60 | Abgriff der Induktivität des Koppel-Schwingkreises |
| 62 | Gehäuse |
| 64 | Anschlüsse des Gehäuses |

**Patentansprüche**

1. Ultraschallvorrichtung mit

- einem Ultraschallwandler (12),
- einem Koppel-Schwingkreis (24), der mit dem Ultraschallwandler (12) gekoppelt ist,
- einer Abgleicheinheit (40) zur Abstimmung der Resonanzfrequenz des Koppel-Schwingkreises (24), und
- einer Ansteuer- und Empfangseinheit (32) zur Ansteuerung des Koppel-Schwingkreises (24) für das Senden von Ultraschallwellen durch den Ultraschallwandler (12) und für den Empfang von Ultraschallwellen seitens des Ultraschallwandlers (12)

**dadurch gekennzeichnet ,**

- **dass** die Abgleicheinheit (40) mindestens einen ansteuerbaren Schalter (42) zum wahlweisen elektrischen Zuschalten eines oder mehrerer Abgleichbauelemente in Form einer oder mehrerer Abgleichwiderstände (54, 56) zu dem Koppel-Schwingkreis (24) aufweist.

2. Ultraschallvorrichtung nach Anspruch 1, **dadurch gekennzeichnet, dass** der Koppel-Schwingkreis (24) einen Widerstand (26), einen Kondensator (28) und eine Spule (30) aufweist und dass die Abgleicheinheit (40) ein oder mehrere ansteuerbare Schalter (42) zur wahlweisen Parallelschaltung eines oder mehrerer Abgleichkondensatoren zum Koppel-Schwingkreiskondensator (28) aufweist.

3. Ultraschallvorrichtung nach Anspruch 1 oder 2, **dadurch gekennzeichnet, dass** der Koppel-Schwingkreis (24) einen Widerstand (26), einen Kondensator (28) und eine Spule (30) aufweist und dass die Abgleicheinheit (40) ein oder mehrere ansteuerbare Schalter (42) zur Verschaltung eines oder mehrerer Abgleichwiderstände (54, 56) in Reihe mit oder parallel zu dem Koppel-Schwingkreiswiderstand (26) aufweist.

4. Ultraschallvorrichtung nach einem der Ansprüche 1 bis 3, **dadurch gekennzeichnet, dass** der Koppel-Schwingkreis (24) einen Widerstand (26), einen Kondensator (28) und eine Spule (30) aufweist und dass die Abgleicheinheit (40) ein oder mehrere ansteuerbare Schalter (42) aufweist, der/die mit einem Abgriff (58, 60) bzw. jeweils einem unterschiedlichen von mehreren Abgriffen (58, 60) der Koppel-Schwingkreisspule (30) verbunden ist/sind.

5. Ultraschallvorrichtung nach einem der Ansprüche 1 bis 4, **dadurch gekennzeichnet, dass** die Abgleicheinheit (40) ferner mindestens einen ansteuerbaren Schalter (42) zum wahlweisen elektrischen Zuschalten eines oder mehrerer weiterer Abgleichselemente wie Abgleichkapazität (46, 48, 50, 52) und/oder Abgleichinduktivität (30, 58, 60) aufweist.

6. Ultraschallvorrichtung nach Anspruch 5 und nach einem der Ansprüche 2 bis 4, **dadurch gekennzeichnet, dass** die Abgleicheinheit (40) mindestens einen ansteuerbaren Schalter (42) zur wahlweisen Parallelschaltung eines oder mehrerer Abgleichkondensatoren zum Koppel-Schwingkreiskondensator (28) aufweist.

7. Ultraschallvorrichtung nach Anspruch 3 oder 6 und nach einem der Ansprüche 2 bis 4, **dadurch gekennzeichnet, dass** die Abgleicheinheit (40) ein oder mehrere ansteuerbare Schalter (42) aufweist, der/die mit einem Abgriff (58, 60) oder jeweils einem unterschiedlichen von mehreren Abgriffen (58, 60) der Koppel-Schwingkreisspule (30) verbunden ist/sind.

8. Ultraschallvorrichtung nach einem der Ansprüche 1 bis 7, **dadurch gekennzeichnet, dass** der Ultraschallwandler (12) einen Wandler-Schwingkreis (14) mit einer Resonanzfrequenz aufweist und dass die Resonanzfrequenz des Koppel-Schwingkreises (24) durch die Abgleich-Einheit (40) auf die Resonanz-Frequenz des Wandler-Schwingkreises abgleichbar ist.

9. Ultraschallvorrichtung nach einem der Ansprüche 1 bis 8, **dadurch gekennzeichnet, dass** der Ultraschallwandler (12) und der Koppel-Schwingkreis (24) in einem gemeinsamen Gehäuse (62) vergossen sind, aus dem elektrische Anschlüsse (64) für die außerhalb des Gehäuses angeordnete Abgleicheinheit oder deren ansteuerbare Schalter (42) herausgeführt sind, wobei die Abgleichbauelemente der Abgleicheinheit (40) ebenfalls in dem vergossenen Gehäuse (62) angeordnet sein können.

**Claims**

1. An ultrasound device comprising

    - an ultrasonic transducer (12),
    - a coupling resonant circuit (24) coupled to the ultrasonic transducer (12),
    - an adjusting unit (40) for adjusting the resonant frequency of the coupling resonant circuit (24), and
    - a controlling and receiving unit (32) for controlling the coupling resonant circuit (24) for transmission of ultrasound waves by the ultrasonic transducer (12) and for reception of ultrasound waves at the ultrasonic transducer (12),

    **characterized in**

    - **that** the adjusting unit (40) comprises at least one controllable switch (42) for selective added electric connection of one or a plurality of adjusting components in the form of one or a plurality of adjusting resistors (54,56) to the coupling resonant circuit (24).

2. The ultrasound device according to claim 1, **characterized in that** the coupling resonant circuit (24) comprises a resistor (26), a capacitor (28) and a coil (30) and that the adjusting unit (40) comprises one or a plurality of controllable switches (42) for selective parallel connection of one or plurality of adjusting capacitors to said coupling resonant circuit capacitor (28).

3. The ultrasound device according to claim 1 or 2, **characterized in that** the coupling resonant circuit (24) comprises a resistor (26), a capacitor (28) and a coil (30) and that the adjusting unit (40) comprises one or a plurality of controllable switches (42) for connecting one or a plurality of adjusting resistors (54,56) in series with or in parallel to said coupling resonant circuit resistor (26).

4. The ultrasound device according to any one of claims 1 to 3, **characterized in that** the coupling resonant circuit (24) comprises a resistor (26), a capacitor (28) and a coil (30) and that the adjusting unit (40) comprises one or a plurality of controllable switches (42) connected to a tap (58,60) and respectively to a respective different one among a plurality of taps (58,60) of said coupling resonant circuit coil (30).

5. The ultrasound device according to any one of claims 1 to 4, **characterized in that** the adjusting unit (40) further comprises at least one controllable switch (42) for selective added electric connection of one or a plurality of further adjusting components such as e.g. an adjusting capacitance (46,48,50,52) and/or an adjusting inductance (30,58,60).

6. The ultrasound device according to claim 5 and any one of claims 2 to 4, **characterized in that** the adjusting unit (40) comprises at least one controllable switch (42) for selective parallel connection of one or a plurality of adjusting capacitors to said coupling resonant circuit capacitor (28).

7. The ultrasound device according to claim 3 or 6 and any one of claims 2 to 4, **characterized in that** the adjusting unit (40) comprises one or a plurality of controllable switches (42) connected to a tap (58,60) and respectively to a respective different one among a plurality of taps (58,60) of said coupling resonant circuit coil (30).

8. The ultrasound device according to any one of claims 1 to 7, **characterized in that** the ultrasonic transducer (12) comprises a transducer resonant circuit (14) having a resonance frequency and that the resonance frequency of the coupling resonant circuit (24) can be adjusted by the adjusting unit (40) to the resonance frequency of the transducer resonant circuit.

9. The ultrasound device according to any one of claims 1 to 8, **characterized in that** the ultrasonic transducer (12) and the coupling resonant circuit (24) are encapsulated in a common housing (62), with electrical connectors (64) being laid out the housing (62) for the adjusting unit arranged externally of the housing or for the controllable switches (42) of the adjusting unit, wherein the adjusting components of the adjusting unit (40) can also be arranged in the encapsulated housing (62).

## Revendications

1.  Dispositif à ultrasons comprenant

    - un transducteur d'ultrasons (12),
    - un circuit résonant de couplage (24) qui est couplé au transducteur d'ultrasons (12),
    - une unité d'équilibrage (40) destinée à accorder la fréquence de résonance du circuit résonant de couplage (24), et
    - une unité de commande et de réception (32) destinée à commander le circuit résonant de couplage (24) pour l'émission d'ondes ultrasonores par le transducteur d'ultrasons (12) et la réception d'ondes ultrasonores côté transducteur d'ultrasons (12),

    **caractérisé en ce que**

    - l'unité d'équilibrage (40) présente au moins un commutateur pouvant être commandé (42) et destiné à provoquer sélectivement la connexion électrique d'un ou plusieurs composants d'équilibrage sous la forme d'une ou de plusieurs résistances d'équilibrage (54, 56) au circuit résonant de couplage (24).

2.  Dispositif à ultrasons selon la revendication 1, **caractérisé en ce que** le circuit résonant de couplage (24) présente une résistance (26), un condensateur (28) et une bobine (30), et **en ce que** l'unité d'équilibrage (40) présente un plusieurs commutateurs pouvant être commandé(s) (42) et destiné(s) à connecter sélectivement un ou plusieurs condensateurs d'équilibrage en parallèle avec le condensateur du circuit résonant de couplage (28).

3.  Dispositif à ultrasons selon la revendication 1 ou 2, **caractérisé en ce que** le circuit résonant de couplage (24) présente une résistance (26), un condensateur (28) et une bobine (30), et **en ce que** l'unité d'équilibrage (40) présente un ou plusieurs commutateurs pouvant être commandés (42) et destinés à interconnecter une ou plusieurs résistances d'équilibrage (54, 56) en série ou en parallèle avec la résistance (26) du circuit résonant de couplage.

4.  Dispositif à ultrasons selon l'une des revendications 1 à 3, **caractérisé en ce que** le circuit résonant de couplage (24) présente une résistance (26), un condensateur (28) et une bobine (30), et **en ce que** l'unité d'équilibrage (40) présente un plusieurs commutateurs pouvant être commandés (42) qui est ou sont relié(s) à une borne (58, 60) ou reliés chacun à une borne différente parmi plusieurs bornes (58, 60) de la bobine (30) du circuit résonant de couplage.

5.  Dispositif à ultrasons selon l'une des revendications 1 à 4, **caractérisé en ce que** l'unité d'équilibrage (40) présente en outre au moins un commutateur pouvant être commandé (42) et destiné à provoquer sélectivement la mise en circuit électrique d'un ou de plusieurs autres éléments d'équilibrage tels qu'une capacité d'équilibrage (46, 48, 50, 52) et/ou une inductance d'équilibrage (30, 58, 60).

6.  Dispositif à ultrasons selon la revendication 5 et selon l'une des revendications 2 à 4, **caractérisé en ce que** l'unité d'équilibrage (40) présente au moins un commutateur pouvant être commandé (42) et destiné à connecter sélectivement un ou plusieurs condensateurs d'équilibrage en parallèle avec le condensateur (28) du circuit résonant de couplage.

7.  Dispositif à ultrasons selon la revendication 3 ou 6 et selon l'une des revendications 2 à 4, **caractérisé en ce que** l'unité d'équilibrage (40) présente un ou plusieurs commutateurs pouvant être commandés (42) qui est ou sont reliés à une borne (58, 60) ou reliés chacun a une borne différente parmi plusieurs bornes (58, 60) de la bobine (30) du circuit résonant de couplage.

8.  Dispositif à ultrasons selon l'une des revendications 1 à 7, **caractérisé en ce que** le transducteur d'ultrasons (12) présente un circuit résonant de transducteur (14) ayant une fréquence de résonance, et **en ce que** la fréquence de résonance du circuit résonant de couplage (24) peut être équilibrée par l'unité d'équilibrage (40) sur la fréquence de résonance du circuit résonant du transducteur.

9.  Dispositif à ultrasons selon l'une des revendications 1 à 8, **caractérisé en ce que** le transducteur à ultrasons (12) et le circuit résonant de couplage (24) sont coulés dans un boîtier commun (62) d'où émergent des connexions électriques (64) prévues pour l'unité d'équilibrage disposée à l'extérieur du boîtier (62) ou pour ses commutateurs pouvant être commandés (42), les composants d'équilibrage de l'unité d'équilibrage (40) pouvant également être disposés dans le boîtier coulé (62).

**Fig.1**

**Fig.2**

**Fig.3**

**Fig.4**

**Fig.5**

**Fig.6**

**Fig.7**

Transformator / Ultraschallwandler

**Fig.8**

Transformator / Ultraschallwandler

**Fig.9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5151085 A
- US 20030164658 A

- US 20100242611 A